# EUROPEAN PATENT SPECIFICATION

(11) **EP 3 224 127 B1**
(45) Date of publication and mention of the grant of the patent: **28.04.2021**
(21) Application number: 15798179.6
(22) Date of filing: 13.10.2015
(51) Int. Cl.: B60L 50/20, B60L 53/18

(54) **LOCKING AND CHARGING SYSTEM FOR ELECTRIC POWERED VEHICLES**
VERRIEGELUNGS- UND AUFLADESYSTEM FÜR FAHRZEUGE MIT ELEKTROANTRIEB
SYSTÈME DE VERROUILLAGE ET DE CHARGE POUR VÉHICULES ÉLECTRIQUES

(30) Priority: 27.11.2014 SI 201400432
(43) Date of publication of application: 04.10.2017
(73) Proprietor: Lock&charge S.r.l., 38068 Rovereto (IT)
(72) Inventor: SOBOTKIEWICZ, Andrej, 2000 Maribor (SI); CORRA, Michele, I-38121 Trento (TN) (IT)
(74) Representative: Laghi, Alberto
(86) International application number: PCT/IB2015/001868
(87) International publication number: WO 2016/083877

(56) References cited:
- WO-A2-2008/157443
- GB-A- 2 496 838

## Description

### Subject of the invention

Subject of the invention is a locking and charging system for electric powered vehicles that can be remotely operated. The locking and charging system is a one-step security and charging system that allows customers to lock and charge their vehicles in one single move. The system thereby acts like a bridge between the vehicle drive train and the charging infrastructure. It communicates with the charger in order to identify and submit at least the charger's ID to the cloud and can exchange with the vehicles drive train charging parameters (at least voltage and current), so that the charger knows how it can charge the attached vehicle.

### Prior art solutions

There are a lot of different types of locks available on the market.

WO2014/012677 A2 is describing a locking device for a bicycle, with a locking cable that is interlocked inside the casing. The locking device features a GPS module and a radio frequency device and an antenna with help of which you can operate the lock. The lock features a main housing and a clamp that is forming in an attached state a space for embracing the component of the bicycle. The solution has the disadvantage, that the locking cable needs to be transported separately and that the lock can only be placed in one specific position on the bicycle. Further you still need to charge your vehicle with a separate device.

WO2010/106238 A1 describes a secure attachment device for an electric vehicle with two or three wheels, wherein the device includes a vehicle attachment means and a battery-recharging means. The attachment means includes two first blocking members with contacts that block the bicycle inside the rack and charges them at the same time. The solution has the disadvantage, that you can only lock a bicycle on the rack but not also when on the way. Further the bicycles need to be specially prepared so they can dock. The device is meant for fleet use, where no other vehicles are welcome.

JP2006001480 (A) describes a locking device to be used for an electric vehicle, to prevent theft of the vehicle during charging and positively performing charging. The solution features a charging unit of a charging management device that features a charging cable. The charging cable can be inserted into the specially prepared circle lock that blocks the rear wheel and locks the charging cable into the battery. The device has the disadvantage that it can only be used with very specific bicycle types. Further the charging cable, that is being locked with the help of the circle lock is not additionally secured and can be easily cut-off.

US2014/0266588 (A1) describes a battery-powered lock that is capable of communicating with a mobile device. The mobile device is authorised to communicate with the lock and can send lock and/or unlock commands to the lock. The device can be used as station-less bike sharing system using the lock that enables a user to drop off and secure the rented bike anywhere at the end of the trip. The device has the disadvantage that it can only communicate its position through wi-fi, which means limited opportunities to share its location and that a e-bicycle owner needs an additional device to charge his vehicle.

WO2008/157443 describes a combination of a locking and charging capacity in one single cable.

### Description of the invention

The locking and charging system for electric powered vehicles according to the invention includes:
- management electronic means that are inserted into a security casing that is mounted onto an electric powered vehicle whereby the management electronic means include different sensors and communicators, for example embedded logic, GSM/GPRS, GPS, accelerometer, etc. that determine the position and forces influencing the management electronic means and that allow communication with at least a remote device;
- a locking and charging cable with one end connected to the management electronic means and with a locking head with an active male part of the electronic locking mechanism and with electricity contacts provided on the other end, whereby the locking head with the active male part is inserted into the passive female counterpart of the locking mechanism which is inside the security casing or in the charging station or in a defined place on the vehicle;
- a charging station, with a specific or universal charger for the electric powered vehicle and a passive female part of the electronic locking mechanism into which the male part of the electronic locking mechanism fits.

The management electronic is inserted inside a security casing and capable to be remotely operated. The locking and charging cable is with one end via a fixation and a security point fixed to the management electronic means in the security casing or on the protective casing or directly to the vehicle itself. In the later case the fixation, i.e. the connection of the locking and charging cable to the management electronic means is performed through the connectors. On the other end of the locking and charging cable, the locking head with the active male part of the electronic locking mechanism and contacts for transferring electricity are provided. All the commands needed for proper operation of the locking mechanism are provided by the management electronic means. The locking head with the active male part of the locking mechanism is inserted into the passive female counterpart of the locking mechanism which is inside the security casing or is positioned on a defined place on the vehicle, thus the vehicle is locked, or it can be inserted into a passive female counterpart of the electronic locking mechanism in a charging station, thus the vehicle is locked and is charging at the same time. The locking and charging cable is always stored on-board of the vehicle.

The charging station can include one or several passive female counterparts of the electronic locking mechanism. The station can be construed according to the known ways as a stand-alone station or it can be by different known means fixed on a wall or any other suitable surface.

All the features, aspects and advantages of present invention will be illustrated and explained in detail further in the description and drawings where:

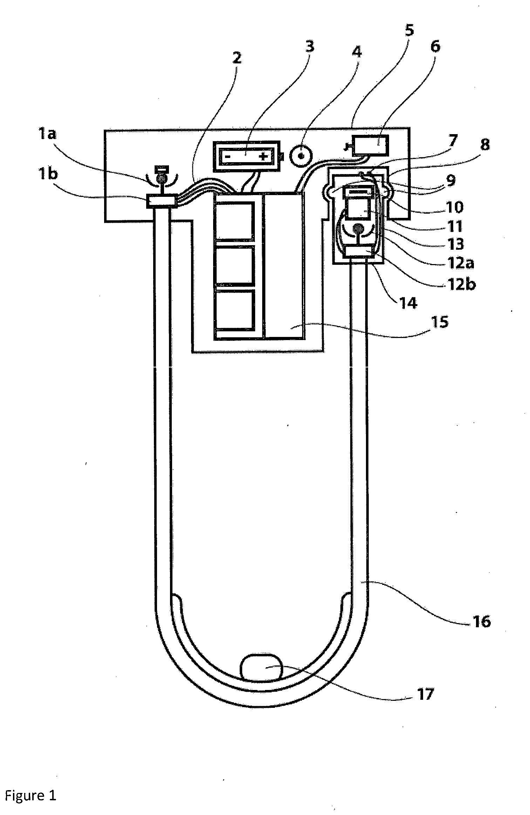

Figure 1: shows the layout of a locking and charging system, where the management electronic means are inserted inside a security casing.

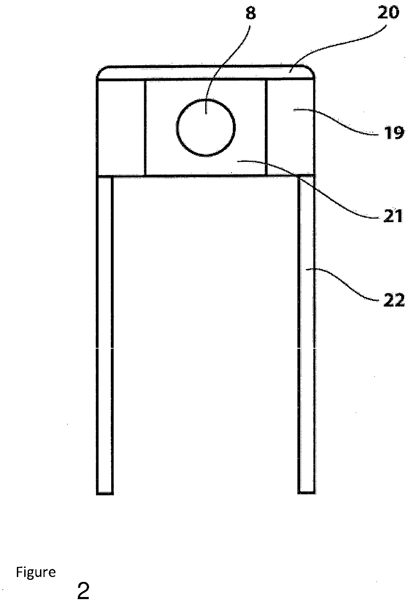

Figure 2: shows one possible layout of a typical charging station.

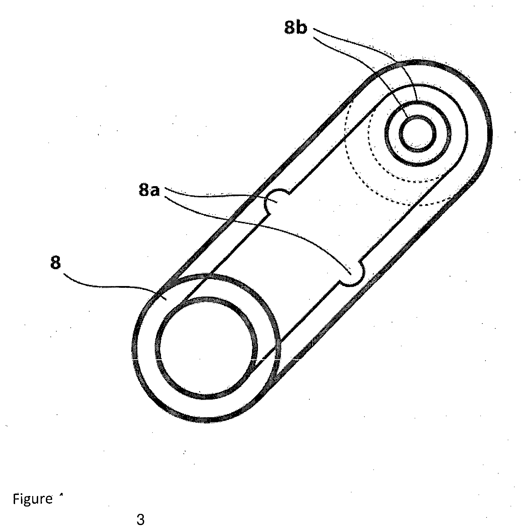

Figure 3: shows the layout of the passive female counterpart of the electronic locking mechanism.

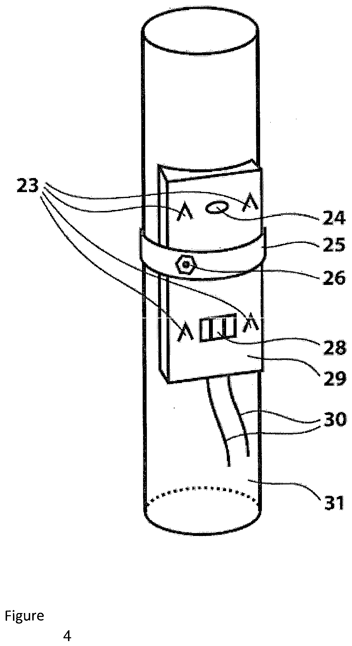

Figure 4: shows one possible configuration of the layout of a vehicle attaching plate that is used to fix the security and/or protective casing with management electronic means inserted inside, into or onto the vehicle.

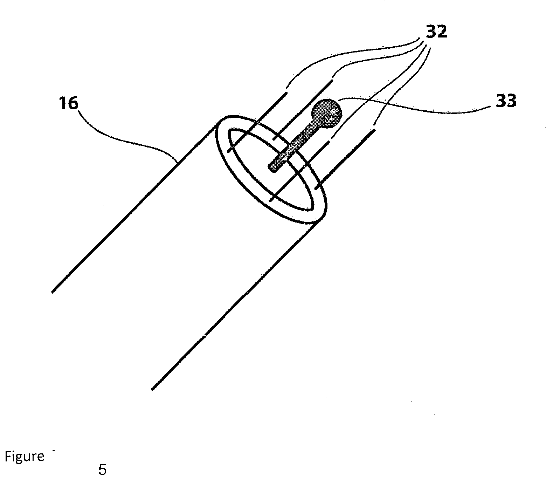

Figure 5: shows an inner configuration of the locking and charging cable.

In one embodiment of the present invention the management electronic means (15) are not integrated into a vehicle, but are placed inside a security casing (5) that is attached onto an electric powered vehicle with the vehicle attaching plate (29). The security casing (5) can be of different forms, size and/or materials. Also the vehicle attaching plate (29) can be of different size, form and materials in order to support attachment to different possible vehicle types and parts of a vehicle. The security casing (5) is attached to the vehicle attaching plate (29) with one, two or several attachment points (23). The position of the security casing (5) on the attachment points (23) is then fixed and protected with the help of a motor (6), which is operated by the management electronic means (15) and positioned inside the security casing (5). The motor (6) locks the security casing (5) to the vehicle attaching plate (29) by a specially designed locking part (24) or by blocking several attachment points (23) on the attaching plate (29), thus not allowing unauthorised persons to remove the security casing (5) from the attaching plate (29) that is fixed on the vehicle (31).

Depending on the type and layout of the vehicle, the vehicle attaching plate (29) can be fixed on the vehicle (31) by different known means, e.g. to a bicycle frame by a clamp (25) and a tightening screw (26). Access to the fixation points, e.g. to the tightening screw (26), is protected; it is covered by the security casing (5), once the security casing (5) with management electronic means (15) is positioned onto the attachment points (23) of the attaching plate (29) and locked to the locking part (24).

The vehicle attaching plate (29) is connected to the vehicle drive train and/or battery with cables (30). Further the attaching plate (29) has connectors (28) to which the management electronic means (15) can be connected via the security casing (5) when fixed on the attaching plate (29).

The management electronic means (15) further include electronic means which include an embedded logic and several sensors, at least sensors to determine the position of a vehicle, sensors to identify potential threatening forces influencing the vehicle, and means to communicate data wirelessly with/to a remote device, server or similar. In order to communicate some of the statuses of the system directly to the user, a signal light (4) may be included in the security casing (5). The signal light (4) can also be accompanied by a button that can be used to enhance the user experience and simplify handling of some functionalities of the system. The signal light and button can also be separately positioned on the protective casing (5).

The management electronic means (15) are connected directly to the vehicle's drive train and/or battery. In case this connection is lost and/or the vehicle's battery is drained, a "back-up battery" (3) that will keep the system running and performing normally may be included in the security casing (5). If the management electronic means (15) are connected to the drive train electronics (e.g. motor controller), advanced security features can be supported, e.g. drive train blocking in case of unauthorised access.

In order to secure the vehicle and transfer the electric energy to the management electronic means (15) and further to the vehicle drive train and/or battery via cables (30), a locking and charging cable (16) is used. The locking and charging cable (16) consists of electric wires (32) and a security cable (33) inside the plastic coating of the cable. Electric wires (32) are used to transfer electric power from the charging station (19) through the management electronic means (15) to the vehicle attaching plate (28) and via cables (30) to the vehicle battery, and to control the motor (11) in the locking head (14) of the locking and charging cable (16). Inside the locking and charging cable (16) a security cable (33) is positioned to protect the vehicle from being stolen. If someone is trying to cut the locking and charging cable (16), the electronic means (15) can, through the electric wires (32), identify this potentially threatening situation by means of monitoring the electric wire loop and communicate this event with a remote device.

The locking and charging cable (16) is fixed on the security casing (5) or in a specially prepared space on the vehicle.

The locking and charging cable (16) is with one end attached to a fixation (1b) and a security (1a) point which are in the security casing (5) or inside a defined place of the vehicle. The fixation point (1a) secures the position of the security cable (33) while the fixation point (1b) makes sure that the locking and charging cable (16) cannot turn so that the electricity wires (2) which connect the locking and charging cable (16) to the management electronic means (15) stay in the exact position. The same principle is used on the other end of the locking and charging cable (16), where the security (12a) and fixation (12b) point is inside the locking head (14).

The other end of the locking and charging cable (16) features the locking head (14). The active male part (13) of the locking mechanism is inside the locking head (14) that is on the tip of the locking and charging cable (16). When the locking head (14) is inserted into the passive female counterpart (8), the active male part (13) of the locking mechanism can lock the locking head (14) into the passive female counterpart (8). The passive female counterpart (8) of the locking mechanism is inside the security casing (5) or in the charging station (19) or in a defined place on the vehicle. The locking mechanism itself can vary from model to model. In one embodiment the locking mechanism can be powered by a motor (11) inside of the locking head (14), that turns a mechanism (10) that blocks the blocking pins (9) which prevents the exit of the locking head (14) from the passive female counterpart (8) or the locking mechanism can be implemented by other known means. The passive female counterpart (8) features indentations (8a) that fit the form and size of the blocking pins (9). The size, the form and the diameter of the locking head (14) alongside with the position of the contacts (7) and blocking pins (9) are standardized, as well as the form, the depth and the position of the electric supply contacts (8b) and the indentations (8a) of the passive female counterpart (8). The locking head (14) includes contacts (7) that are positioned on the tip of the head (14) and/or on the side of the head (14). Respectively, the passive female part (8) also includes contacts (8b) at the same position. The locking head (14) is not polarised, so the user can insert it into the passive female counterpart (8) in any position.

The locking and charging cable (16) is held in the position on a vehicle by cable fixation mountings (17) that can vary in form, size, material and functionality, e.g. stretching, holding the cable.

The charging station (22) can offer one, two or several chargers (21) with passive female locking counterparts (8), to which the vehicle can be locked and charged at the same time. The charging station (22) can be inside a casing (19) of different form and sizes. The casing (19) protects the charger (21), the passive female locking counterpart (8) and, when inserted, the locking head (14), from being tempered. Depending on the application need, the charging station (22) can be mounted on a wall or any other suitable surface e.g. public lights, etc., or free standing. The charging station (22) includes a light (20) that can be used to advertise the station and/or to communicate the status of the charging station. The charger (21) can be bike specific - used only by a specific type of bicycle, or universal - used by any vehicle in the right voltage range.

The management electronic means (15, 15a) establish communication with the charger (21) via wireless or wired connection. The charger (21) can communicate at least its ID to the management electronic means (15, 15a) or any other eligible device, and can take commands from the management electronic means (15, 15a) or any other eligible device, concerning at least the right parameters for charging.

## Claims

1. A locking and charging system for electric powered vehicles, including: management electronic means (15, 15a) that are inserted into a security casing (5) that is mounted onto an electric powered vehicle (31) whereby the management electronic means (15, 15a) include different sensors and communicators that determine the position and forces influencing the management electronic means and that allow communication with at least a remote device and whereby the management electronic means (15, 15a) are connected to the vehicle's drive train and/or battery; a locking and charging cable (16) with one end connected to the management electronic means (15, 15a) and with a locking head (14) with an active male part (13) of the electronic locking mechanism with electricity contacts (7) provided on the other end, whereby the locking head (14) with the active male part (13) is inserted into the passive female counterpart (8) of the locking mechanism which is inside the security casing (5) or in the charging station (22) or in a defined place on the vehicle; a charging station (22), with a specific or universal charger (21) for the electric powered vehicle and a passive female counterpart (8) of the electronic locking mechanism into which the active male part (13) of the electronic locking mechanism fits; whereby the management electronic means (15, 15a) further include electronic means which include an embedded logic and several sensors, at least sensors to determine the position of the vehicle, sensors to identify potential threatening forces influencing the vehicle, and means to communicate data wirelessly with/to a remote device, server or similar; the security casing (5) being attached onto an electric powered vehicle (31) with a vehicle attaching plate (29) with at least one attachment point (23),
**characterized in** a motor (6), which is positioned inside the security casing (5), locks the security casing (5) to the vehicle attaching plate (29) by a locking part (24) or by blocking the attachment point (23) on the attaching plate (29) and whereby the attaching plate (29) is connected to the vehicle drive train and/or battery with cables (30) and the attaching plate (29) has connectors (28) to which the management electronic means (15) are connected via the security casing (5) when fixed on the attaching plate (29).

2. A locking and charging system according to previous claim 1, **characterized in that** when the locking head (14) is inserted into the passive female counterpart (8), the active male part (13) of the locking mechanism can lock the locking head (14), whereby the locking mechanism is carried out in different known ways.

3. A locking and charging system according to claim 2, **characterized in that** the locking mechanism can be powered by a motor (11) inside of the locking head (14), that turns a mechanism (10) that blocks the blocking pins (9) which prevents the exit of the locking head (14) from the passive female counterpart (8) and the passive female counterpart (8) features indentations (8a) that fit the form and size of the blocking pins (9) and whereby the locking head (14) includes contacts (7) that are positioned on the tip of the head (14) and/or on the side of the head (14) and respectively, the passive female part (8) also includes contacts (8b) at the same position.

4. A locking and charging system according to claim 3, **characterized in that** the size, the form and the diameter of the locking head (14) alongside with the position of the contacts (7) and blocking pins (9) are standardized, as well as the form, the depth and the position of the electric supply contacts (8b) and the indentations (8a) of the passive female counterpart (8).

## Patentansprüche

1. Verriegelungs- und Ladesystem für elektrisch betriebene Fahrzeuge, umfassend: elektronische Verwaltungsmittel (15, 15a), die in ein Sicherheitsgehäuse (5) eingesetzt sind, das an einem elektrisch betriebenen Fahrzeug (31) angebracht ist, wobei die elektronischen Verwaltungsmittel (15, 15a) verschiedene Sensoren und Kommunikatoren umfassen, die die Position und die Kräfte bestimmen, die die elektronischen Verwaltungsmittel beeinflussen, und die Kommunikation mit mindestens einer entfernten Vorrichtung ermöglichen und wobei die elektronischen Verwaltungsmittel (15, 15a) mit dem Getriebe des Fahrzeugs und/oder der Batterie verbunden sind; ein Verriegelungs- und Ladekabel (16) mit einem Ende, das mit den elektronischen Verwaltungsmitteln (15, 15a) verbunden ist, und mit einem Verriegelungskopf (14) mit einem aktiven männlichen Teil (13) des elektronischen Verriegelungsmechanismus mit angeordneten elektrischen Kontakten (7) am anderen Ende, wobei der Verriegelungskopf (14) mit dem aktiven männlichen Teil (13) in den passiven weiblichen Gegenteil (8) des Verriegelungsmechanismus eingeführt wird, das innerhalb des Sicherheitsgehäuses (5) entweder an der Ladestation (22) oder an einem definierten Punkt am Fahrzeug angeordnet ist; eine Ladestation (22) mit einer spezifischen oder universellen Ladevorrichtung (21) für das elektrisch betriebene Fahrzeug und mit einem passiven weiblichen Gegenteil (8) des elektronischen Verriegelungsmechanismus, in das der im Verriegelungsmechanismus aktive männliche Teil (13) elektronisch passt; wobei die elektronischen Verwaltungsmittel (15, 15a) ferner elektronische Mittel umfassen, die eine eingebaute Logik und zahlreiche Sensoren, mindestens Sensoren zum Bestimmen der Position des Fahrzeugs, Sensoren zum Identifizieren potentieller Bedrohungskräfte, die das Fahrzeug beeinflussen, und Mittel zum drahtlose Kommunizieren von Daten zu/von einem entfernten Gerät, Server oder ähnlichem umfassen; wobei das Sicherheitsgehäuse (5) an einem elektrisch betriebenen Fahrzeug (31) mit einer Fahrzeugbefestigungsplatte (29) mit mindestens einem Befestigungspunkt (23) befestigt ist, die **dadurch gekennzeichnet ist,**
**dass** ein Motor (6) an der Innenseite des Sicherheitsgehäuse (5) die Sicherheitsgehäuse (5) mit der Befestigungsplatte (29) des Fahrzeugs entweder mittels eines Verriegelungsteils (24) oder durch Blockieren des Befestigungspunkts (23) an der Befestigungsplatte (29) blockiert, und wobei die Befestigungsplatte (29) mit Kabeln (30) mit dem Fahrzeuggetriebe und/oder der Batterie verbunden ist, und wobei die Befestigungsplatte (29) Verbinder (28) aufweist, mit denen die elektronischen Verwaltungsmittel (15) über die Sicherheitsgehäuse (5) verbunden sind, wenn sie an der Befestigungsplatte (29) befestigt sind.

2. Verriegelungs- und Ladesystem nach dem vorhergehenden Anspruch 1, **dadurch gekennzeichnet, dass** beim Einsetzen des Verriegelungskopfes (14) in den passiven weiblichen Gegenteil (8) der aktive männliche Teil (13) des Verriegelungsmechanismus den Verriegelungskopf (14) verriegeln kann, wobei der Verriegelungsmechanismus auf verschiedene Arten implementiert ist.

3. Verriegelungs- und Ladesystem nach Anspruch 2, **dadurch gekennzeichnet, dass** der Verriegelungsmechanismus durch einen Motor (11) innerhalb des Verriegelungskopfes (14) angetrieben werden kann, der einen Mechanismus (10) dreht, der die Verriegelungsstifte (9) blockiert, die das Austreten des Verriegelungskopfes (14) aus dem passiven weiblichen Gegenteil (8) verhindern, und wobei der passive weibliche Gegenteil (8) mit Kerben (8a) versehen ist, die sich an die Form und die Abmessungen der Verriegelungsstifte (9) anpassen, und wobei der Verriegelungskopf (14) Kontakte (7) aufweist, die an der Spitze des Kopfes (14) und/oder an der Seite des Kopfes (14) positioniert sind, und wobei jeweils der passive weibliche Teil (8) ferner Kontakte (8b) in derselben Position umfasst.

4. Verriegelungs- und Ladesystem nach Anspruch 3, **dadurch gekennzeichnet, dass** die Abmessungen, Form und Durchmesser des Verriegelungskopfes (14) zusammen mit der Position der Kontakte (7) und der Verriegelungsstifte (9) standardisiert sind, sowie die Form, Tiefe und Position der elektrischen Versorgungskontakte (8b) und der Kerben (8a) des passiven weiblichen Gegenteils (8).

## Revendications

1. Système de verrouillage et de charge pour des véhicules actionnés électriquement, comprenant: des moyens électroniques de gestion (15, 15a) qui sont insérés dans un boîtier de sécurité (5) qui est fixé à un véhicule électrique (31),
dans lequel les moyens de gestion électroniques (15, 15a) comprennent des différents capteurs et communicateurs qui déterminent la position et les forces qui affectent les moyens électroniques de gestion et permettent la communication au moins avec un dispositif distant et dans lequel les moyens électroniques de gestion (15, 15a) sont connectés à la transmission du véhicule et/ou à la batterie; un câble de verrouillage et de charge (16) ayant une extrémité connectée aux moyens électroniques de gestion(15, 15a), et avec une tête de verrouillage (14) avec une partie mâle active (13) du mécanisme de verrouillage électronique avec des contacts électriques (7) disposés à l'autre extrémité, où la tête de verrouillage (14) avec la partie mâle active (13) est insérée dans une contrepartie femelle (8) passive du mécanisme de verrouillage, à l'intérieur du boîtier de sécurité (5), soit au poste de chargement (22), soit en un point défini sur le véhicule; une poste de chargement (22) avec un dispositif de charge spécifique ou universel (21) pour le véhicule électrique et avec une contrepartie femelle passive (8) dans laquelle la partie mâle active (13) du mécanisme de verrouillage électronique s'adapte; dans lequel les moyens de gestion électroniques (15, 15a) comprennent en outre des moyens électroniques qui comprennent une logique intégrée, et de nombreux capteurs, au moins des capteurs pour déterminer la position du véhicule, des capteurs potentiels pour identifier les forces de menace influençant le véhicule, et des moyens pour la communication sans fil de données à propos/depuis un dispositif distant, un serveur ou autre; où le boîtier de sécurité (5) étant fixé à un véhicule électrique (31) ayant une plaque de fixation (29) du véhicule avec au moins un point de fixation (23) **caractérisé en ce qu'**un moteur (6) à l'intérieur du boîtier de sécurité (5) bloque le boîtier de sécurité (5) avec la plaque de fixation (29) du véhicule soit au moyen d'une pièce de verrouillage (24) soit en bloquant le point de fixation (23) sur la plaque de fixation (29), et dans lequel la plaque de fixation (29) est reliée avec des câbles (30) à la transmission du véhicule et/ou à la batterie, et la plaque de fixation (29) a des connecteurs (28), avec lesquels les moyens électroniques de gestion (15) par le boîtier de sécurité (5) sont reliés, quand ils sont fixés à la plaque de fixation (29).

2. Système de verrouillage et de chargement selon la revendication 1 précédente, **caractérisé en ce que** lors de l'insertion de la tête de verrouillage (14) dans la contrepartie femelle passive (8), la partie mâle active (13) du mécanisme de verrouillage peut bloquer la tête de verrouillage (14), le mécanisme de verrouillage étant mis en œuvre de diverses manières.

3. Système de verrouillage et de chargement selon la revendication 2, **caractérisé en ce que** le mécanisme de verrouillage peut être entraîné par un moteur (11) à l'intérieur de la tête de verrouillage (14), qui fait tourner un mécanisme (10) qui bloque les broches de verrouillage (9) qui empêchent la sortie de la tête de verrouillage (14) de la contrepartie femelle passive (8), et la contrepartie femelle passive (8) est pourvue d'encoches (8a) qui s'adaptent à la forme et aux dimensions des broches de verrouillage (9), et la tête de verrouillage (14) comprend des contacts (7) positionnés sur la pointe de la tête (14) et/ou du côté de la tête (14), et respectivement la partie femelle passive (8) comprend en outre des contacts (8b) dans la même position.

4. Système de verrouillage et de charge selon la revendication 3, **caractérisé en ce que** les dimensions, la forme et le diamètre de la tête de verrouillage (14), ainsi que la position des contacts (7) et des broches de verrouillage (9), sont normalisés, ainsi que la forme, la profondeur et la position des contacts d'alimentation électrique (8b) et des encoches (8a) de la contrepartie femelle passive (8).
